# EUROPÄISCHE PATENTSCHRIFT

(11) **EP 0 598 088 B1**
(45) Veröffentlichungstag und Bekanntmachung des Hinweises auf die Patenterteilung: **27.09.1995**
(21) Anmeldenummer: 93912896.3
(22) Anmeldetag: 05.06.1993
(51) Int. Cl.: F16B 7/04

(54) **VERBINDUNGSELEMENT**
CONNECTION ELEMENT
ELEMENT DE LIAISON

(30) Priorität: 17.06.1992 DE 4219871
(43) Veröffentlichungstag der Anmeldung: 25.05.1994
(73) Patentinhaber: MERO-RAUMSTRUKTUR GmbH & Co. Würzburg, D-97082 Würzburg (DE)
(72) Erfinder: SPÄTH, Werner, F., D-7896 Wutöschingen (DE)
(74) Vertreter: Schaafhausen, Ludwig Richard, Dipl.-Phys.
(86) Internationale Anmeldenummer: EP9301424
(87) Internationale Veröffentlichungsnummer: WO9325820

(56) Entgegenhaltungen:
- EP-A- 0 059 463
- EP-A- 0 160 196
- US-A- 4 799 819
- US-A- 4 974 987

## Beschreibung

Die Erfindung betrifft ein Verbindungselement zum lösbaren Verbinden zweier Gestellbauteile, bestehend aus einem Stützenprofil und einem Zargenprofil, wobei das Verbindungselement ortsfest in das als Hohlprofil ausgebildete Zargenprofil einsetzbar ist und in einem Gehäuse mindestens ein bewegliches Halteelement aufweist, welches mittels eines das Halteelement durchsetzenden, in einer Lageröffnung des Gehäuses drehbar gelagerten Exzenterbolzens in Längsrichtung des Verbindungselements bewegbar ist, wodurch ein aus der Stirnseite des Gehäuses herausragender Kupplungshaken des Halteelements mit einer hinterschnittenen Längsnut des Stützenprofils in Eingriff bringbar ist, und wobei der Exzenterbolzen gegen die Kraft einer Feder in das Gehäuse eindrückbar und in eine Querbohrung des Zargenprofils einrastbar ist.

Derartige Verbindungselemente sind in vielfältigen Ausgestaltungen bekannt und werden insbesondere zur Verbindung von Stützenprofilen und Zargenprofilen verwendet, mit denen u.a. Messe- und Ausstellungsstände und Ladeneinrichtungen errichtet werden. Die Verbindung soll dabei einerseits äußerst fest, andererseits aber auch leicht herstellbar und wieder lösbar sein.

Ein gattungsgemäßes Verbindungselement ist aus der DE-C-31 53 232 bekannt. Hierbei ist zur Verhinderung eines versehentlichen Eindrückens des Exzenterbolzens und damit eines ungewollten Herausrutschens des Verbindungselements aus der Profilstange bei zusammengebauten Profilstangen als Sicherung ein ortsfester Anschlag im Inneren des Lagergehäuses vorgesehen, der bezüglich eines zur Anlage des Exzenterbolzens im Eindrücksinne dienenden Endstücks des Halteejements derart angeordnet ist, daß der Anschlag in Ausschublage des Halteelements sich zwar außerhalb des Endstücks befindet und daher dessen Quer-Verschwenkbarkeit zuläßt, aber in Einschublage des Halteelements unter dem Endstück liegt und dessen Quer-Verschwenkbarkeit blockiert. Bei einer solchen Eindrückverhinderung ist der gehäusefeste Anschlag so dimensioniert, daß er im wesentlichen nur in der Endphase des Festziehvorganges unter dem Halteelement zu liegen kommt und damit dessen Quer-Verschwenkbarkeit blockiert.

Um das unbeabsichtigte Eindrücken des Exzenterbolzens bereits in einem frühen Stadium des Verbindungsvorganges zu verhindern und um zu gewährleisten, daß ein unbeabsichtigtes Abspringen des Halteelements von der Exzenterscheibe nicht möglich ist, wurde in der DE-A-40 18 817 vorgeschlagen, an dem beweglichen Halteelement Nocken auszubilden, welche in Ausschublage des Halteelements gegenüber von im Gehäuseboden ausgebildeten Ausnehmungen zu liegen kommen und dabei eine axiale Bewegbarkeit des Exzenterbolzens zulassen, dagegen in Einschublage des Halteelements außer Eingriff mit den Ausnehmungen sind und sich am Gehäuseboden abstützen, so daß der Exzenterbolzen an einer axialen Bewegbarkeit gehindert wird.

Beim Drehen des Exzenterbolzens werden über die Exzenterscheibe hohe Spannkräfte auf die hintere Steuerkante des Halteelements übertragen, so daß es bei den bekannten Verbindungselementen im Kupplungsfall gelegentlich zu Funktionsstörungen am Halteelement kommen kann. Beim Drehen und gleichzeitigen Ausüben eines axialen Druckes auf den Exzenterbolzen kann es zu einem Verkanten des Halteelements in dem Gehäuse und zu einer vorgetäuschten Spannstellung kommen. Außerdem kann die hintere Steuerkante durch die hohen Spannkräfte bleibend deformiert werden und insbesondere, wenn Materialfehler vorliegen oder nach einer Langzeitbelastung Materialermüdung eintritt, sogar zu einem Bruch des Halteelementes führen.

Um die Belastbarkeit und Lebensdauer der Verbindungselemente zu erhöhen, wurde in der DE-C 39 26 598 daher vorgeschlagen, das Platteninnenende des Halteelements zu einer Schlaufe zurückzubiegen, wobei das äußere Schlaufenende einen quer zur Platte verlaufenden Schlaufenschenkel bildet, der als hintere Steuerkante für die Exzenterscheibe fungiert. Die von der Exzenterscheibe auf das Halteelement ausgeübten Spannkräfte nimmt der Schlaufenschenkel auf. Da die Spannkräfte im Schließsinne der Schlaufenrolle wirksam sind, hält die Schlaufe wachsenden Spannkräften zunehmend stand, so daß die Funktionssicherheit der hinteren Steuerkante des Halteelements sogar erhöht wird. Ähnliche Verbindungselemente sind aus der EP-A 0 412 338 und der EP-A 0 412 339 bekannt. Auch bei diesen Verbindungselementen wird das Halteelement jedoch beim Eindrücken des Exzenterbolzens mit nach unten gedrückt, so daß die Gefahr des Verkantens und Abrutschens des Halteelements von der Exzenterscheibe weiter besteht.

Aufgabe der Erfindung ist es daher, ein gattungsgemäßes Verbindungselement mit einer Eindrückverhinderung derart weiterzubilden, daß ein Eindrücken des Exzenters nur in der weitgehenden Lösestellung möglich ist und in jeder Betriebsstellung das Halteelement einwandfrei geführt und die Anlage des Halteelements an der Exzenterscheibe gewährleistet ist.

Diese Aufgabe wird erfindungsgemäß im wesentlichen dadurch gelöst, daß in dem Gehäuseboden eine zu der Lageröffnung exzentrische Ausnehmung ausgebildet ist, mit der eine Exzenterscheibe des Exzenterbolzens zumindest in Ausschubstellung des Halteelementes in Eingriff bringbar ist.

Das Halteelement liegt demnach in jeder Betriebsstellung auf dem Gehäuseboden auf und ist in jeder Stellung des Exzenterbolzens sicher mit der Exzenterscheibe verbunden. Beim Eindrücken des Exzenterbolzens wird die Lage des Halteelements nicht verändert, so daß das Halteelement auch nicht verkanten kann. Insbesondere braucht das Halteelement nicht an einer Quer-Verschwenkbarkeit in Einschublage gehindert werden. Das Eindrücken des Exzenterbolzens wird lediglich in der Ausschublage des Halteelements dadurch ermöglicht, daß die Exzenterscheibe des Exzenterbolzens mit der exzentrischen Ausnehmung in dem Gehäuseboden in Eingriff tritt. In Einschublage des Halteelements liegt die Exzenterscheibe auf dem Gehäuseboden auf, so daß der Exzenterbolzen nicht eindrückbar ist.

Um sicherzustellen, daß der Exzenterbolzen bereits bei einer geringfügigen Verschiebung des Halteelements gegenüber der Ausschublage am Eindrücken gehindert ist, entsprechen die Exzentrizität und Abmaße der in einer Materialanhäufung im Gehäuseboden ausgebildeten Ausnehmung im wesentlichen der Exzentrizität und den Abmaßen der Exzenterscheibe des Exzenterbolzens.

Die Längsverschiebung des Halteelements wird vorteilhafterweise durch die Seitenwände des Gehäuses geführt. Um sicherzustellen, daß das Halteelement auch von oben und unten einwandfrei geführt ist, ist in Weiterbildung des Erfindungsgedankens vorgesehen, daß am hinteren Ende des Halteelements eine Aufbiegung derart ausgebildet ist, daß sie bis nahe an die dem Gehäuseboden gegenüberliegende Gehäusewand reicht. Dadurch ist das Halteelement auf allen vier Seiten geführt, so daß ein Verkanten bei der Längsverschiebung ausgeschlossen ist.

Gemäß einer bevorzugten Ausgestaltung der Erfindung ist in dem Lagerzapfen des Exzenterbolzens eine nach unten offene Ausnehmung zur Aufnahme der Feder ausgebildet. Damit wird die Bewegung des Halteelementes von der Feder nicht beeinträchtigt und ein sicheres Einführen der Exzenterscheibe in die exzentrische Ausnehmung gewährleistet.

Zweckmäßigerweise ist im Gehäusedeckel ein abgekröpfter Deckelabschnitt ausgebildet, der mit der hinteren Kante einer Ausnehmung im Halteelement in der Weise zusammenwirkt, daß das vordere Ende des Halteelementes bei einer Ausschubbewegung des Halteelementes eine Querbewegung ausführt.

Weitere Merkmale, Vorteile und Anwendungsmöglichkeiten der vorliegenden Erfindung ergeben sich aus der nachfolgenden Beschreibung eines Ausführungsbeispieles und der Zeichnung. Dabei bilden alle beschriebenen und/oder bildlich dargestellten Merkmale für sich oder in beliebiger Kombination den Gegenstand der Erfindung, unabhängig von ihrer Zusammenfassung in den Ansprüchen oder deren Rückbeziehung.

Es zeigen:
- Fig. 1: eine Explosionsdarstellung eines erfindungsgemäßen Verbindungselements,
- Fig. 2: eine Draufsicht auf ein Verbindungselement gemäß Fig. 1 in Einschublage mit abgenommenem Gehäusedeckel,
- Fig. 3: einen Schnitt entlang der Linie III-III in Fig. 2,
- Fig. 4: eine Draufsicht auf das in Fig. 2 gezeigte Verbindungselement jedoch in Ausschublage und
- Fig. 5: einen Schnitt entlang der Linie V-V in Fig. 4.

Das in der Zeichnung dargestellte Verbindungseelement 1 besteht aus einem Gehäuse 2, in dem ein Halteelement 3 längsverschieblich angeordnet ist, einer Feder 4, einem als Exzenterbolzen 5 ausgebildeten Betätigungselement und einem Gehäusedeckel 6.

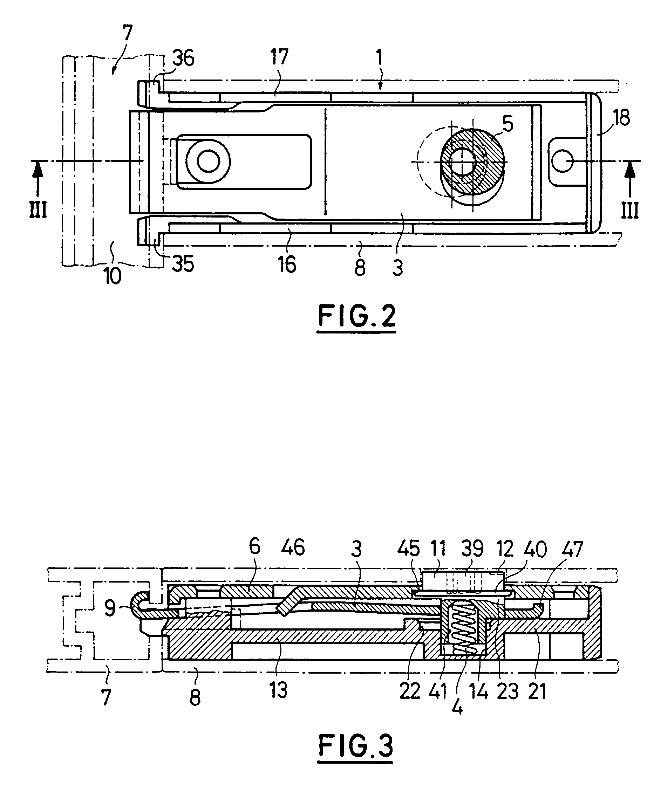

Das Verbindungselement 1 dient zum lösbaren Verbinden zweier Gestellbauteile, insbesondere von in den Fig. 2 und 3 strichpunktiert dargestellten Stützenprofilen 7 und Zargenprofilen 8.

In montiertem Zustand ist das Verbindungselement 1 in das als Hohlprofil ausgebildete Zargenprofil 8 eingesetzt und ein an dem Halteelement 3 ausgebildeter Kupplungshaken 9, welcher stirnseitig aus dem Gehäuse 2 herausragt, hintergreift eine in dem Stützenprofil 7 ausgebildete hinterschnittene Längsnut 10. Ein Exzenterkopf 11 des Exzenterbolzens 5 ist in eine Querbohrung 12 des Zargenprofils 8 nachgiebig eingerastet, so daß das Verbindungselements 1 sicher in dem Zargenprofil 8 gehalten wird. Durch Anziehen des Halteelements 3 wird aufgrund einer Drehung des Exzenterbolzens 5 mittels eines an dem Exzenterkopf 11 angreifenden Betätigungswerkzeuges das Zargenprofil 8 an das Stützenprofil 7 herangezogen und festgeklemmt.

Das Gehäuse 2 besteht aus einem Gehäuseboden 13, in dem eine Lageröffnung 14 zur Aufnahme eines Lagerzapfens 15 des Exzenterbolzens 5 ausgebildet ist, Seitenwänden 16, 17 und einer Rückwand 18 sowie Zapfen 19, 20 zum Verbinden des Gehäuses 2 mit dem Gehäusedeckel 6.

Im hinteren Bereich des Gehäusebodens 13 ist eine Materialanhäufung 21 vorgesehen, auf welcher das Halteelement 3 aufliegt. In der Materialanhäufung 21 ist eine in Bezug auf die Lageröffnung 14 für den Lagerzapfen 15 des Exzenterbolzens 5 exzentrische Ausnehmung 22 ausgebildet, die mit einer Exzenterscheibe 23 des Exzenterbolzens 5 in Eingriff bringbar ist. Die Exzentrizität und Abmaße der Ausnehmung 22 entsprechen im wesentlichen der Exzentrizität und den Abmaßen der Exzenterscheibe 23.

Zur sicheren Verbindung des Gehäuses 2 mit dem Gehäusedeckel 6 sind an den Seitenwänden 16, 17 Vorsprünge 24, 25 und 26, 27 ausgebildet, welche mit entsprechend ausgebildeten seitlichen Aussparungen 28, 29 und 30, 31 in dem Gehäusedeckel 6 zusammenwirken. Die Zapfen 19, 20 sind auf einem Führungszapfen 32 bzw. einer weiteren Materialanhäufung 33 im Gehäuseboden 13 angeordnet. An der Stirnseite des Führungszapfens 32 ist eine Auflaufschräge 34 angeordnet.

An der Stirnseite des Gehäuses 2 sind seitlich vorstehende Kupplungsnasen 35, 36 vorgesehen, deren Vorsprünge dazu dienen, daß das Verbindungselement 1 nicht über seine vorgesehene Lage hinaus in das Zargenprofil 8 eingeschoben werden kann.

Das Halteelement 3 besteht aus einem federelastischen Stahlblech, in dessen hinterem Abschnitt eine quer verlaufende längliche Durchtrittsöffnung 37 für die Exzenterscheibe 23 ausgebildet ist. In seinem vorderen Bereich weist das Halteelement 3 eine Ausnehmung 38 auf, durch die der Führungszapfen 32 des Gehäuses 2 und ein abgewinkelter Abschnitt 46 des Gehäusedeckels 6 ragt.

An seinem hinteren Ende weist das Halteelement 3 eine Aufbiegung 47 auf, die derart ausgebildet ist, daß sie bis nahe an den Gehäusedeckel 6 reicht.

Das als Exzenterbolzen 5 ausgebildete Betätigungselement besteht aus dem bolzenförmigen Exzenterkopf 11 mit einer als Werkzeugaufnahme dienenden zentralen Betätigungsöffnung 39. An den Exzenterkopf 11 schließt sich eine konzentrisch zu dem Exzenterkopf 11 angeordnete Stützscheibe 40, die einen etwas größeren Durchmesser als der Exzenterkopf 11 aufweist, sowie die hierzu exzentrisch angeordnete Exzenterscheibe 23 an. Hieran schließt sich der wiederum konzentrisch angeordnete Lagerzapfen 15 an. In dem Lagerzapfen 15 ist eine nach unten offene Ausnehmung 41 zur Aufnahme der Feder 4 ausgebildet. Die Feder 4 ist eine Schraubenfeder.

Das Gehäuse 2 wird durch den Gehäusedeckel 6 verschlossen. Dafür sind in dem hinteren und vorderen Bereich des Gehäusedeckels 6 Öffnungen 42 und 43 vorgesehen, die zur Aufnahme der Zapfen 19 und 20 in dem Gehäuse 2 mit diesen fluchten. Gegenüber der Lageröffnung 14 in dem Gehäuseboden 13 ist eine kreisförmige Öffnung 44 in dem Gehäusedeckel 6 ausgebildet, durch die der Exzenterkopf 11 hindurchtritt, wobei sich die Stützscheibe 40 in einer an der Unterseite des Gehäusedeckels 6 ausgebildeten Ausnehmung 45 abstützt, um ein Herausdrücken des Exzenterbolzens 5 aus dem Verbindungselement 1 zu verhindern.

Der Gehäusedeckel 6 weist im Bereich der hinteren Kante der Ausnehmung 38 in dem vorderen, gegenüber dem hinteren Abschnitt leicht abgewinkelten Abschnitt des Halteelementes 3 einen abgekröpften Abschnitt 46 auf, der mit der hinteren Kante der Ausnehmung 38 des Halteelements 3 zusammenwirkt und beim Ausschieben des Halteelements 3 eine Querbewegung des vorderen Endes des Halteelements 3 bewirkt.

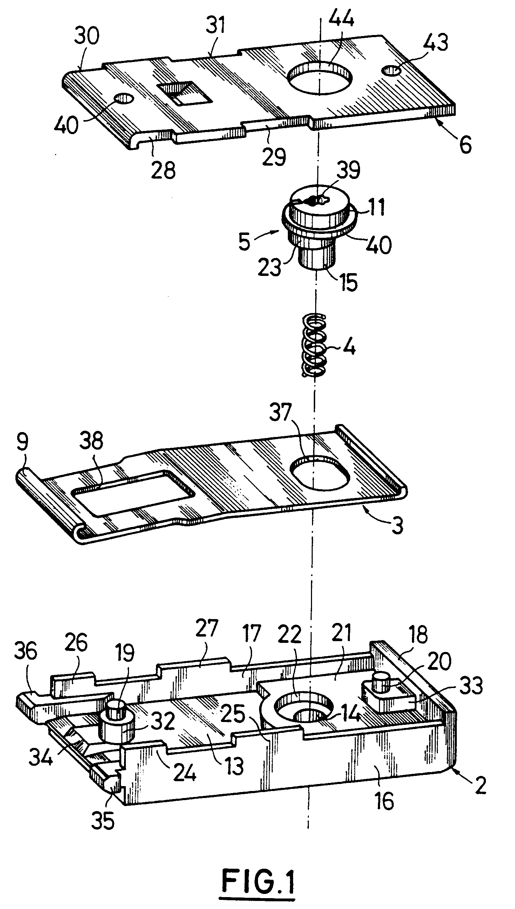

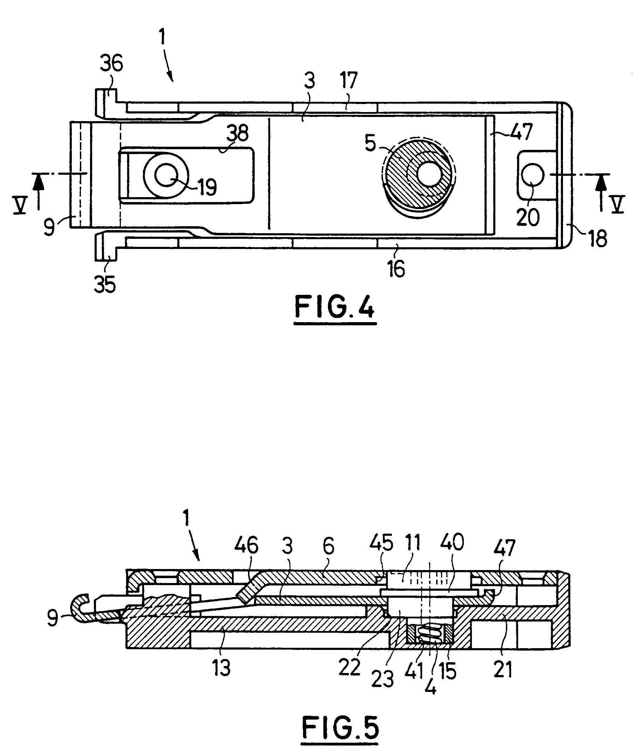

Der Zusammenbau des Verbindungselementes ergibt sich anschaulich aus Fig. 1. Nachfolgend wird die Funktionsweise des Verbindungselements 1 beschrieben:
Damit das Verbindungselement 1 in ein Zargenprofil 8 eingesetzt werden kann, ist es zunächst durch Drehen des Exzenterbolzens 5 mittels eines geeigneten Schraubendrehers od. dgl., der in der zentralen Betätigungsöffnung 39 in dem Exzenterkopf 11 angreift, in seine Lösestellung zu bringen. In dieser, in den Fig. 4 und 5 dargestellten Stellung ist das Halteelement 3 aus dem Gehäuse 2 herausgefahren und die Exzenterscheibe 23 liegt genau über der exzentrischen Ausnehmung 22 auf dem Gehäuseboden 13. Somit kann die Exzenterscheibe 23 in die Ausnehmung 22 und damit der Exzenterbolzen 5 so weit in das Gehäuse 2 eingedrückt werden, bis die Oberfläche des Exzenterbolzens 5 annähernd mit der Oberfläche des Gehäusedeckels 6 fluchtet.

In dieser eingedrückten Stellung des Exzenterbolzens 5 läßt sich das Verbindungselement 1 so weit in das Zargenprofil 8 einschieben, bis der Exzenterbolzen 5 gegenüber der Querbohrung 12 im Zargenprofil 8 zu liegen kommt, in welche der Exzenterkopf 11 durch die Kraft der Feder 4 druckknopfartig eingreift und das Verbindungselement 1 in dieser Stellung in dem Zargenprofil 8 festhält. Ein versehentlich weiteres Einschieben des Verbindungselements 1 in das Zargenprofil 8 wird durch die Kupplungsnasen 35, 36 an der Stirnseite des Gehäuses 2 verhindert. Ein zu weites Herausdrücken des Exzenterbolzens 5 durch die Querbohrung 12 in dem Zargenprofil 8 wird dadurch verhindert, daß sich der Exzenterbolzen 5 über die Stützscheibe 40 in der Ausnehmung 45 an der Unterseite des Gehäusedeckels 6 abstützt. Der Exzenterbolzen 5 wird durch die Feder 4 jedoch mindestens so weit herausgedrückt, daß die Exzenterscheibe 23 außer Eingriff mit der exzentrischen Ausnehmung 22 in dem Gehäuseboden 13 gerät. Dadurch ist die durch die Ausnehmung 22 bewirkte Sperrung der Exzenterscheibe 23 aufgehoben und der Exzenterbolzen 5 läßt sich mittels eines Schraubendrehers od. dgl. drehen. Wird das Halteelement 3 durch Drehen des Exzenterbolzens 5 in das Gehäuse 2 hereingezogen und damit auch das Stützenprofil 7 an das Zargenprofil 8 herangezogen und schließlich durch Verklemmen befestigt, so kommt die Exzenterscheibe 23 außerhalb der Ausnehmung 22 auf der Materialanhäufung 21 des Gehäusebodens 13 zu liegen (Fig. 3). Sobald die Exzenterscheibe 23 also gegenüber der exzentrischen Ausnehmung 22 verdreht ist, ist der Exzenterbolzen 5 nicht mehr so weit in das Gehäuse eindrückbar, daß der Exzenterkopf 11 außer Eingriff mit dem Rand der Querbohrung 12 in dem Zargenprofil 8 kommt. Ein unbeabsichtigtes Lösen des Verbindungselements 1 aus dem Zargenprofil 8 ist somit ausgeschlossen.

Die Abmaße und Exzentrizität der Exzenterscheibe 23 entsprechen im wesentlichen den Abmaßen und der Exzentrizität der Ausnehmung 22 im Gehäuseboden 13. Damit ist ein Eindrücken des Exzenterbolzens 5 und ein damit verbundenes unbeabsichtigtes Lösen des Verbindungselements 1 aus dem Zargenprofil 8 bereits bei einer geringfügigen Verdrehung der Exzenterscheibe 23 gegenüber der Ausnehmung 22 verhindert.

In dieser Lage, in der ein Eindrücken des Exzenterbolzens 5 nicht möglich ist, wird das Halteelement 3 durch Weiterdrehen des Exzenterbolzens 5 in seine Endposition bewegt, in der das Zargenprofil 8 formschlüssig mit dem Stützenprofil 7 verbunden ist. Das Halteelement 3 führt dabei neben einer Längsbewegung in seinem vorderen Bereich eine Querbewegung aus, die durch ein Auflaufen der vorderen Kante der Ausnehmung 38 in dem Halteelement 3 auf die Auflaufschräge 31 bewirkt wird. Das Halteelement 3 wird dabei seitlich von den Seitenwänden 16, 17 des Gehäuses 2 und über seine Breite durch die hintere Aufbiegung 47 geführt, so daß ein Verkanten des Halteelements 3 unmöglich ist.

Das Lösen des Verbindungselements 1 erfolgt durch umgekehrtes Drehen des Schraubendrehers oder dgl. bis zu einer Stellung, in der die Exzenterscheibe 23 so über der exzentrischen Ausnehmung 22 zu liegen kommt, daß die Exzenterscheibe in die Ausnehmung eingedrückt werden kann und damit auch der Exzenterbolzen 5 wieder soweit in das Gehäuse 2 eindrückbar ist, daß er außer Eingriff mit der Querbohrung 12 in dem Zargenprofil 8 gelangt, womit das Verbindungselement 1 bei Bedarf wieder aus dem Zargenprofil 8 entfernt werden kann. Bei der Vorwärtsbewegung des Halteelements 3 läuft das hintere Ende der Ausnehmung 38 in dem Halteelement 3 auf den abgekröpften Deckelabschnitt 46 auf, so daß das Halteelement in seinem vorderen Bereich eine Querbewegung ausführt, die ein Lösen des Zargenprofils 8 von dem Stützenprofil 7 ermöglicht.

### Bezugszeichenliste:

- 1: Verbindungselement
- 2: Gehäuse
- 3: Halteelement
- 4: Feder
- 5: Exzenterbolzen
- 6: Gehäusedeckel
- 7: Stützenprofil
- 8: Zargenprofil
- 9: Kupplungshaken
- 10: Längsnut
- 11: Exzenterkopf
- 12: Querbohrung
- 13: Gehäuseboden
- 14: Lageröffnung
- 15: Lagerzapfen
- 16: Seitenwand
- 17: Seitenwand
- 18: Rückwand
- 19: Zapfen
- 20: Zapfen
- 21: Materialanhäufung
- 22: Ausnehmung
- 23: Exzenterscheibe
- 24: Vorsprung
- 25: Vorsprung
- 26: Vorsprung
- 27: Vorsprung
- 28: Aussparung
- 29: Aussparung
- 30: Aussparung
- 31: Aussparung
- 32: Führungszapfen
- 33: Materialanhäufung
- 34: Auflaufschräge
- 35: Kupplungsnase
- 36: Kupplungsnase
- 37: Durchtrittsöffnung
- 38: Ausnehmung
- 39: Betätigungsöffnung
- 40: Stützscheibe
- 41: Ausnehmung
- 42: Öffnung
- 43: Öffnung
- 44: Öffnung
- 45: Ausnehmung
- 46: abgekröpfter Deckelabschnitt
- 47: Aufbiegung

## Patentansprüche

1. Verbindungselement zum lösbaren Verbindung zweier Gestellbauteile, bestehend aus einem Stützenprofil und einem Zargenprofil, wobei das Verbindungselement ortsfest in das als Hohlprofil ausgebildete Zargenprofil einsetzbar ist und in einem Gehäuse mindestens ein bewegliches Halteelement aufweist, welches mittels eines das Halteelement durchsetzenden, in einer Lageröffnung des Gehäuses drehbar gelagerten Exzenterbolzens in Längsrichtung des Verbindungselements bewegbar ist, wodurch ein aus der Stirnseite des Gehäuses herausragender Kupplungshaken des Halteelements mit einer hinterschnittenen Längsnut des Stützenprofils in Eingriff bringbar ist, und wobei der Exzenterbolzen gegen die Kraft einer Feder in das Gehäuse eindrückbar und in eine Querbohrung des Zargenprofils einrastbar ist, dadurch gekennzeichnet, daß in dem Gehäuseboden (13) eine zu der Lageröffnung (14) exzentrische Ausnehmung (22) ausgebildet ist, mit der eine Exzenterscheibe (23) des Exzenterbolzens (5) zumindest in Ausschubstellung des Halteelements (3) in Eingriff bringbar ist.

2. Verbindungselement nach Anspruch 1, dadurch gekennzeichnet, daß die exzentrische Ausnehmung (22) im Bereich einer Materialanhäufung (21) im Gehäuseboden (13) angeordnet ist.

3. Verbindungselement nach Anspruch 1 oder 2, dadurch gekennzeichnet, daß die Exzentrizität und Abmaße der Ausnehmung (22) im Gehäuseboden (13) im wesentlichen der Exzentrizität und den Abmaßen der Exzenterscheibe (23) des Exzenterbolzens (5) entsprechen.

4. Verbindungselement nach Anspruch 1 oder 2, dadurch gekennzeichnet, daß am hinteren Ende des Halteelements (3) eine Aufbiegung (47) derart ausgebildet ist, daß sie bis nahe an die dem Gehäuseboden (13) gegenüberliegende Gehäusewand (6) reicht.

5. Verbindungselement nach Anspruch 1 oder 2, dadurch gekennzeichnet, daß in dem Lagerzapfen (15) des Exzenterbolzens (5) eine nach unten offene Ausnehmung (41) zur Aufnahme der Feder (4) ausgebildet ist.

6. Verbindungselement nach Anspruch 1, dadurch gekennzeichnet, daß im Gehäusedeckel (6) ein abgekröpfter Deckelabschnitt (46) ausgebildet ist, der mit der hinteren Kante einer Ausnehmung (38) im Halteelement (3) in der Weise zusammenwirkt, daß das vordere Ende des Halteelements (3) bei einer Ausschubbewegung des Halteelementes eine Querbewegung ausführt.

## Claims

1. Connecting element for the detachable connection of two stand components, consisting of a support profile and a frame profile, the connecting element being insertable in a fixed position into the frame profile, which is constructed in the form of a hollow profile, and having in a housing at least one movable holding element which is movable in the longitudinal direction of the connecting element by means of an eccentric bolt which passes through the holding element and is rotatably mounted in a bearing opening of the housing, so that a coupling hook of the holding element, which hook projects out of the end face of the housing, can be brought into engagement with an undercut longitudinal groove of the support profile, and it being possible for the eccentric bolt to be pressed into the housing against the force of a spring and to be locked into a transverse bore of the frame profile, characterised in that in the housing base (13) there is formed a recess (22), which is eccentric with respect to the bearing opening (14), in which an eccentric plate (23) of the eccentric bolt (5) can be engaged, at least when the holding element (3) is in the extended position.

2. Connecting element according to claim 1, characterised in that the eccentric recess (22) is arranged in the region of a thickening of the material (21) in the housing base (13).

3. Connecting element according to claim 1 or 2, characterised in that the eccentricity and dimensions of the recess (22) in the housing base (13) correspond substantially to the eccentricity and the dimensions of the eccentric plate (23) of the eccentric bolt (5).

4. Connecting element according to claim 1 or 2, characterised in that at the rear end of the holding element (3) a bent-up portion (47) is formed in such a manner that it extends as far as a point close to the housing wall (6) opposite the housing base (13).

5. Connecting element according to claim 1 or 2, characterised in that in the trunnion (15) of the eccentric bolt (5) there is constructed a recess (41) that is open towards the bottom for receiving the spring (4).

6. Connecting element according to claim 1, characterised in that in the housing lid (6) there is formed a lid portion (46) that is bent at an angle, which lid portion (46) cooperates with the rear edge of an aperture (38) in the holding element (3) in such a manner that the forward end of the holding element (3) performs a transverse movement as the holding element is extended.

## Revendications

1. Elément d'assemblage destiné à relier de manière démontable deux éléments de structure, comprenant un profilé formant montant et un profilé formant châssis, l'élément d'assemblage étant implanté de manière fixe dans le châssis agencé sous la forme d'un profilé creux et comportant, à l'intérieur d'un boîtier, au moins un élément mobile de fixation qui peut être déplacé dans la direction longitudinale de l'élément d'assemblage au moyen d'un axe à excentrique qui traverse l'élément de fixation et est monté tournant dans une ouverture formant palier du boîtier, un crochet d'accouplement de l'élément de fixation qui fait saillie au delà de la face frontale du boîtier pouvant ainsi être amené en prise avec une rainure longitudinale en contre-dépouille du montant, l'axe à excentrique pouvant être rentré à l'intérieur du boîtier par pression à l'encontre de la force d'un ressort et s'encliquetant dans un trou transversal du châssis, caractérisé par le fait qu'un évidement (22) est aménagé dans le fond (13) du boîtier de manière excentrée par rapport à l'ouverture (14) formant palier, évidement au contact duquel est amené un disque excentrique (23) de l'axe à excentrique (5), au moins lorsque l'élément de fixation (3) est en position sortie.

2. Elément d'assemblage selon la revendication 1, caractérisé par le fait que l'évidement (22) excentré est disposé dans la région d'une surépaisseur (21) de matériau dans la fond (13) du boîtier.

3. Elément d'assemblage selon la revendication 1 ou la revendication 2, caractérisé par le fait que l'excentricité et les dimensions de l'évidement (22) dans le fond (13) du boîtier correspondent sensiblement à l'excentricité et aux dimensions de l'excentrique (23) de l'axe à excentrique (5).

4. Elément d'assemblage selon la revendication 1 ou la revendication 2, caractérisé par le fait qu'une partie pliée est aménagée à l'extrémité postérieure de l'élément de fixation (3) de manière telle que celle-ci s'étende jusqu'au voisinage de la paroi (6) du boîtier située en vis-à-vis du fond (13) dudit boîtier.

5. Elément d'assemblage selon la revendication 1 ou la revendication 2, caractérisé par le fait qu'un évidement (41) ouvert vers le bas et destiné à recevoir le ressort (4) est aménagé dans le tourillon (15) de l'axe à excentrique (5).

6. Elément d'assemblage selon la revendication 1, caractérisé par le fait qu'une partie coudée (46) est aménagée dans le couvercle (6) du boîtier, laquelle partie coudée coopère avec le bord arrière d'un évidement (38) dans l'élément de fixation (3) de manière telle que l'extrémité antérieure dudit élément de fixation (3) exécute un déplacement transversal lors d'un mouvement de sortie de l'élément de fixation.
